# EUROPEAN PATENT APPLICATION

(11) **EP 4 530 906 A1**
(43) Date of publication of application: **02.04.2025**
(21) Application number: 23200802.9
(22) Date of filing: 29.09.2023
(51) Int. Cl.: G06F 21/62, G06F 21/64, G06Q 10/10

(54) **SELECTIVE DISCLOSURE TO MULTIPLE RECIPIENTS WITH OPTIONAL USE OF DEPOSITARY**

(71) Applicant: Siemens Aktiengesellschaft, 80333 München (DE)
(72) Inventor: Kasinathan, Prabhakaran, 81549 München (DE); Seltzsam, Stefan, 85653 Aying (DE); Wimmer, Martin, 85579 Neubiberg (DE)
(74) Representative: Siemens Patent Attorneys

(57) **Abstract**

The invention relates to a computer-implemented method and system for controlled and selective disclosure of data to multiple recipients using a multi-part encrypted data structure and optionally an SD-Depositary. The holder sends a request to the issuer for a signed token, which may contain partially masked data. The issued token, comprising both plain text and masked confidential data, can be shared with a verifier. When the verifier wishes to view the confidential data, they must acquire a multi-part encrypted data structure, which is further comprised of a header, recipient information, a list of encrypted transport keys, and an encrypted payload of the original clear data. For enhanced security, the encryption key can be split, requiring cooperation between the SD-Depositary and the verifier for decryption. In such an optional embodiment, the SD-Depositary acts as a centralized access point, allowing the verifier to view the decrypted data in a controlled environment without enabling data extraction, thereby minimizing the risk of unauthorized dissemination. The system provides a high level of data security, selective access flexibility, and collaborative decryption options.

## Description

### Field of the invention

This invention relates to the field of data privacy and security, specifically to protocols and data formats used for the selective disclosure of information to multiple recipients with the optional involvement of a data depositary.

### Background of the invention

In today's interconnected digital landscape, the exchange of data has become paramount to the seamless operation of businesses and institutions, particularly in cross-organizational business environments such as supply chains, where partners need to share sensitive data. With multiple stakeholders - from manufacturers and suppliers to logistics providers - sharing and accessing various data points, ensuring the security and confidentiality of this information becomes a challenge of great importance.

Conventionally, organizations have relied on selective disclosure systems to manage this challenge (the so-called need to know approach). Such systems are designed for allowing the sharing of specific data subsets, safeguarding other parts from being accessed. For instance, a supplier might wish to disclose the price and quantity of a product but not its proprietary manufacturing process. While these systems are commendable for their ability to provide segmented access, they are often contingent on an inherent trust that the recipient will not misuse the disclosed data or seek to uncover the undisclosed sections.

In order to address such a challenge, architectures, such as using trusted third party (TTP), emerged as a viable solution. By introducing an intermediary, the process aimed at offering a controlled environment for data disclosure. That is to say that the primary data holder shares the information with an intermediary, who then manages and controls further access. However, this solution introduced its own set of drawbacks. For instance, providing data in plaintext to the centralized entity meant relinquishing direct control over its further distribution. The centralized nature of such systems also renders them vulnerable to single points of failure, be it through malicious attacks, internal breaches, or even system downtimes.

The evolution of technology then brought forth decentralized protocols, like SD-JWT (Selective Disclosure JSON Web Token). These methods shifted focus from a centralized model, leveraging token-based mechanisms to offer data owners greater control and autonomy over their data. By embedding information within tokens, they facilitated a more granular approach to data disclosure.

With the current strong trend towards decentralized architectures, such as blockchain and distributed ledgers, a more intricate approach to selective data disclosure has become imperative. Not just for operational efficiency, but also for instance to align with the burgeoning regulatory landscape. With frameworks like the General Data Protection Regulation (GDPR) stipulating strict mandates on data handling, storage, and sharing, there is an evident need for solutions that cater to both operational and compliance needs.

Beyond operational and regulatory concerns, there is also the pivotal matter of trust. In vast decentralized networks, interactions frequently occur between parties that might not have established trust. It is not just about protecting data, but also about ensuring its authenticity, integrity, and the assurance that it has not been tampered with during the exchange.

To sum up, the current digital paradigm highlights a pressing need for advanced methods of selective disclosure that tackle these multi-faceted challenges.

### Summary of the invention

The present invention provides a novel data disclosure protocol combined with a unique data format, specifically tailored to manage the selective disclosure of confidential information to one or multiple recipients, optionally involving an intermediary depositary. Whether operating with a central intermediary or working directly, the system is designed for adaptability and efficiency.

The present invention addresses several concerns. Firstly, it ensures that recipients can always validate the genuineness and completeness of the data they receive (verifiability of information, which can be certified by a trusted authority). This assurance extends to situations where only parts of the information are shared; recipients should be able to trust that this partial information still aligns with the original complete dataset. Secondly, the invention allows the data owner to decide exactly what information they want to share and with whom, ensuring selective data disclosure to one or many recipients. Optionally, the invention can use a depositary to bolster the trustworthiness and security of this process, in particular an SD-Depositary (Selective Disclosure Depositary). This depositary can serve as a safe storage hub for both verifiable and disclosed information. By this means, the disclosed information is not just stored as plain text. Instead, it is secured, thus preventing direct readability. This design choice wards off vulnerabilities, especially in scenarios where the SD-Depositary could be compromised. In the context of the optional use of such a depository, another layer of protection can come in the form of strict data access and distribution regulations. For instance, the data can be accessed only at a trusted/known platform. Moreover, users are restricted from downloading the root data, ensuring that the distribution and further exposure of the data remain firmly in control.

The method starts with a "Holder" (an entity holding the information to share, like a supplier). This entity approaches an "Issuer" (an entity capable of certifying the provided data, even when split between "confidentialized" data, i.e., partially masked and partially in clear, and a data providing the correspondence between masked data and the corresponding raw data that have been masked), making a request for the creation of a certified document or token (e.g., SD-JWT token), which is designed to carry data that can be partially concealed or masked, ensuring only specific information is immediately visible. Once generated by the Issuer, the document / token is sent to the Holder with a tuple of the masked data and the original corresponding data that have been masked in the document / token. From there, the Holder has the capability to share these pieces of data with one or multiple "Verifiers" (entities that are the recipient of information, such as OEMs). These Verifiers, upon receiving the token, can immediately make use of any plaintext data contained within it, that is the data left unmasked.

Another advantage of the proposed approach is highlighted when a Verifier expresses interest in the concealed / masked data part of the certified document / token. Should the Holder permit access, the delivery is executed using a multi-part encrypted data structure. This approach stems from the ability of the inventive approach to apply foundational principles from secure multi-purpose internet mail extensions (MIME). It is designed to encrypt disclosed data for numerous recipients concurrently, thus having the capability for the disclosed data to be securely archived in centralized repositories, like an SD-Depositary.

To summarize, this invention presents a technically refined solution for the secure and selective sharing of sensitive data, using innovative encryption methods, segmented key distribution, and a centralized access point.

The details of one or more embodiments are set forth in the accompanying drawings and the description below. Other features will be apparent from the description and drawings, and from the claims.

### Brief description of the Drawings

- Fig. 1: is a diagram of a selective disclosure according to the prior art.
- Fig. 2: is a diagram of a computer implemented method for selective disclosure of data to multiple recipients according to the present invention.
- Fig. 3: is a schema of a multi-part encrypted data structure to be used in a computer implemented method for selective disclosure of data to multiple recipients according to the present invention.
- Fig. 4: is a diagram of a selective disclosure using a multi-part encrypted data structure and a SD-Depositary according to an embodiment of the present invention.

### Detailed description of the invention

Hereinafter, the embodiments will now be described in detail with reference to the accompanying drawings. However, the disclosure cannot be limited to the embodiment in which the idea of the disclosure is presented, and another embodiment included within range of idea of another backward disclosure, or the present disclosure may be easily proposed by addition, change, deletion and the like of another element.

In the context of this invention, a "Holder" is an entity, someone or something, like a company or individual, that has certain confidential or sensitive information. They hold onto this data and can choose when and how they want to share it with others. They might have this data because of their position in a transaction, their role in a supply chain, or simply because they generated or collected this information. The goal of the Holder is to control and manage the release or sharing of this information in a way that is secure and respects privacy.

Similarly, an "Issuer" is an entity (e.g., attestation authority), which could be an organization or a specialized authority, responsible for creating or authenticating specific pieces of information. They play a crucial role in vouching for the validity of the data. The Issuer essentially provides a layer of trust, ensuring that the data or information they issue is genuine and trustworthy. When others see data or credentials from a recognized Issuer, they can be more confident in its authenticity.

A "Verifier" is an entity or individual that assesses or checks the authenticity and validity of the provided information. They are essentially the recipients or consumers of the data, who need assurance regarding its legitimacy. The Verifier relies on the credentials provided by the Issuer to confirm that the information they receive, such as from a Holder, is genuine and unchanged. In many scenarios, the Verifier may require such information to make informed decisions or undertake specific actions. For instance, in a business context, a company may act as a Verifier to check the credibility of a supplier's claims before entering into a contract.

A "Token" in the present invention, especially a SD-JWT (Selective Disclosure for JWTs), is a digitally signed piece of information. This token encapsulates data, some of which might be hidden or masked for instance using a salt and provides a way to verify the authenticity and integrity of that data. The Issuer generates and signs this token based on the information provided by the Holder. When the Holder presents this token to a Verifier, the Verifier can use it to confirm the validity of the disclosed data. The token acts as a bridge of trust between parties, ensuring that the information has not been tampered with and comes from a legitimate source.

The present invention presents an innovative protocol and data format designed to control the disclosure of confidential data to one or multiple recipients. This can be achieved with or without the intervention of an intermediary depositary.

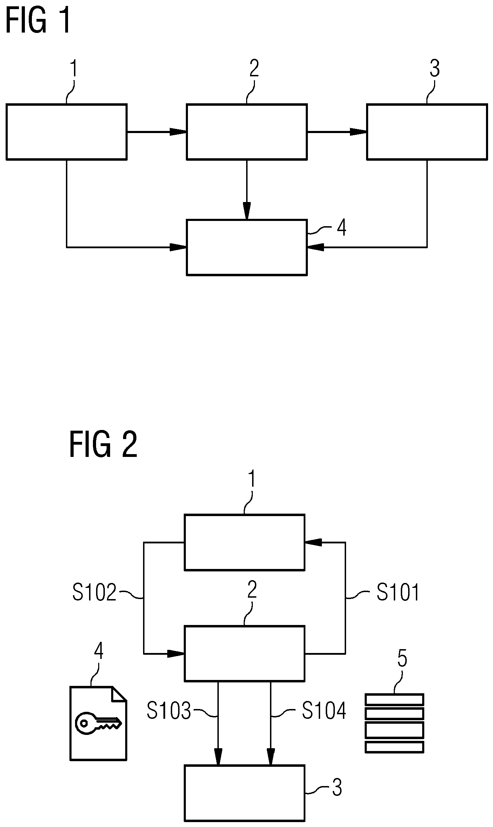

Conventionally, the selective disclosure of information in a cross-organization business process was performed in a method illustrated by Fig. 1. In this approach, data integrity (i.e., the functionality of being able to prevent and/or at least being able to identify data manipulations) and non-repudiation (i.e., the functionality of being able to identify the source of information or modifications) are ensured. This can be performed using known PKI technologies where an issuer of data signs using its private key. A verifier can verify using the public key of the issuer in order to validate that the data was provided by the issuer without modification. For instance, using an X.509 certificate, the public key can be associated with a person or legal entity. Examples are XML signatures or verifiable credentials (VC) which introduce the three roles of issuer 1, holder 2, and verifier 3. In the illustration of Fig. 1, an issuer 1 could be a certification authority. As an independent trusted certification authority, the issuer 1 issues a verifiable credential about for instance the carbon footprint (PCF) of a component that a subcontractor produces. The subcontractor, as holder 2, can provide the corresponding verifiable credential to an OEM, acting as a verifier 3, to which it delivers its component. The OEM can then check the verifiable credential in a verifiable data registry 4, so that it can be proved that the provided information is trustworthy.

In such a case, implementing a selective disclosure can be done for instance using a so-called SD-JWT, or Selective Disclosure for JWTs (JSON Web Tokens). It represents a mechanism that enables tailored data sharing. JWTs are compact, URL-safe tokens primarily used to communicate claims between two entities. Comprising three integral components - the header, which identifies the token type and signing algorithm; the payload, containing claims or assertions and additional metadata; and the signature, which verifies the sender's authenticity and data integrity - JWTs traditionally offer transparent data presentation. However, with the advent of selective disclosure, it is now feasible to modulate this transparency. Rather than revealing the entire content of the JWT payload, selective disclosure allows for specific portions of the data to be shared, while others remain undisclosed. This ability to parse out sensitive or non-essential information ensures that the receiving party only accesses what's relevant to them, bolstering both privacy and data security in digital transactions.

For instance, in our illustrative example, the issuer 1 can create a SD-JWT for the holder 2 (the subcontractor) containing protected information about the specification of the component provided to the verifier 3 (the OEM). This could be illustrated by the following code:

```
 {
   "iss":"certifier-identity-https://example.com/cert_auth",
   "iat": 1516239022,
   "sub":"dfad2dd704e96b115bb97180adl;jansdkn",
   "pcf" : {
       "pcf_value":"50kg",
       "product_name":"Great Product ABC"
       "pcf_standard":"xyz"
       "_sd":[
  
 "fcfe6a7679101251328cbfeleclc75dfdc3906dc7e78edcl44c949e660768416",
 "40ce7a8ae9e853f95745069e005c23352250c79cf75a297c2149dcf735d2049c",
 "dcc9a3c6e97fe6f927e7976d08020f228bf9409eeb160490d53ebb51f9c63e7b"
       ]
       "extended_use":"YES"
   },
   "_sd_alg":"sha-256"
 }JWS->signed by Certification Authority
```

It is visible that some data is public and in plain text, such as the PCF Value of 50kg. In that case, the verifier 3 (the OEM) or any other actor can see them for the start. On the other hand, some information in the _sd field are replaced by a mask that has been obtained using a salt (that is to say a random value and the salt are used to replace the confidential data).

If an actor such as the verifier 3 (the OEM) needs access to the raw information in plain text of the confidential field that have been masked, he can request it from the holder 2 (the subcontractor), which - if agreed - will provide the requested information separately. The following code lines illustrates what could be the information about the chip and RAM:

```
 disclosure for the CPU / vendor of the CPU
 "fcfe6a7679101251328cbfeleclc75dfdc3906dc7e78edc144c949e660768416"
 ["SALT_VALUE_CHIP", "chip", "Super powerful CPU-1234"]
  
 disclosure for memory chips used
 "40ce7a8ae9e853f95745069e005c23352250c79cf75a297c2149dcf735d2049c"
 ["SALT_VALUE_RAM", "ram", "Very Fast RAM"]
```

The verifier 3 can verify the correctness of the information provided based on the fact that the issuer 1 has evaluated the authenticity of the information before generating the token. In other words, in this approach, the information can be disclosed in a verifiable way.

However, such an approach comes with several disadvantages. Among them the fact that the information is not entirely secured. Indeed, the second part of the information which contains the raw data replacing the mask is sensitive and is vulnerable to data leakage when transferred or stored. Further, once provided, the holder has no more control on the further dissemination of verified data.

Fig. 2 shows a method for selective disclosure of data to multiple recipients in a computer environment according to an embodiment of the present invention.

In a step 101, a holder 2 sends a request to an issuer 1 to generate and sign a document or token 4. To do so, it sends a request which can comprise the information to be certified and partially masked. This information can be a document. In an embodiment, the document / token 4 can use the data structures and the protocol of SD-JWT (Selective Disclosure for JWTs which is available for standardization). However, this step can be performed with other approaches and alternative representations can be applied such as using XML and XML signatures.

In a step S102, the issuer 1 issues and signs a certified data package comprising a certified document or token 4 comprising certified partially masked data (comprising part of the original data masked and part kept clear) and a certified correspondence between the masked data and the original data, potentially in the form of a tuple. The issuer 1 sends the certified data package the holder 2.

In a step S103, the holder can send the document / token 4 to one or more of multiple verifiers 3. In an example, the verifier 3 is an entity in the supply chain that integrates or uses products supplied by the holder 1. The verifier 3 can use/verify data that is contained in plain text in the token. However, he will not be able to access a part of the data that remains confidential to him, and which is masked. This is because a part of the data is in plain text whereas another part of the data is treated as confidential and masked, with data to be protected masked by using a salt as illustrated in the approach of Fig. 1.

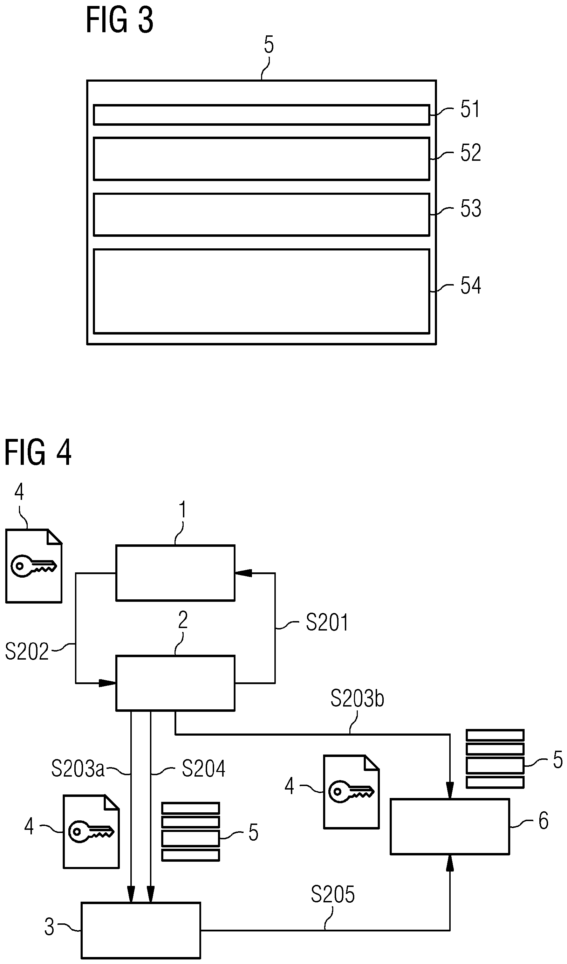

For taking into account the cases where the verifier 3 wants to obtain access to the confidential information part of the document or token 4, in a step S104, the verifier 3 can request to the holder 2 access to confidential information contained in the token. If the holder 2 agrees, the holder 2 sends to the verifier the certified correspondence data or tuple. This data can be in the form a corresponding multi-part encrypted data structure 5 which generation and structure will be discussed in more details below whilst discussing Fig. 3. It is to be noted that this form of the certified correspondence data can be prepared by the issuer 1 or the holder 2.

Fig. 3 illustrates a multi-part encrypted data structure 5 to be used in a computer implemented method for selective disclosure of data to multiple recipients according to the present invention.

The multi-part encrypted data structure 5 comprises 4 parts: a header part 51, an information about recipients part 52, a list of encrypted transport key part 53 and an encrypted payload part 54.

The header part 51 comprises a header corresponding to a mask masking the original raw data protected in the document or token 4. For instance, using the example code above, the header can be:

```
 disclosure for
 "40ce7a8ae9e853f95745069e005c23352250c79cf75a297c2149dcf735d2049c ".
```

The information about recipients part 52 can comprises information about potential recipients. These recipients are defined by the holder 2. The information can comprise the public key of the verifiers 3 that are to receive this multi-part encrypted data structure 5.

The list of encrypted transport key part 53 can comprise one transport key which is encrypted multiple times using the public keys of the various recipients of the information about recipients part 52. There is typically one transport key which is encrypted multiple times using the public keys of the various recipients.

The encrypted payload part 54 comprises the raw data protected or original clear data that has been replaced by the mask in the document / token 4 (that is to say the data that have been protected by the issuer 1). According to the available transport keys for the recipients listed in the information about recipients part 52, a verifier listed as recipient can have access to the encrypted data in the encrypted payload for which he has a corresponding key.

Getting back to the method of Fig. 2, the verifier 3 which has received both the token 4 and the multi-part encrypted data structure 5 will obtain the raw data masked by the salt in the token. This approach is less vulnerable to data leakage during storage or transport in that it is not sufficient to obtain the multi-part encrypted data structure as this piece of data is encrypted and the various content are only available according to the recipient policy defined in it. However, this approach still has the downside that once the verifier 3 had access to the plain text information, the holder 2 no longer controls the dissemination of data.

In a preferred approach, the protocol of the method of Fig. 2 is modified to introduce the use of an SD-Depositary as illustrated in Fig. 4.

The steps S201 and S202 can be the same as the steps S101 and S102 disclosed for the method of Fig. 2.

However, step S203 distributes the document or token 4 and the multi-part encrypted data structure 5. More particularly, in a step S203a, the holder 2 sends the document / token 4 to the verifier 3 as in the approach of Fig. 2. In parallel, the holder 2 registers/stores both the token and the multi-part encrypted data structure 5 in a SD-Depositary 6.

In this approach, the multi-part encrypted data structure 5 is modified. Firstly, the SD-Depositary can be added as one of the recipients listed with its corresponding encryption key as other recipient defined in the multi-part encrypted data structure 5. Further, the key used to encrypt the raw data is split into at least two parts: one SD-Depositary key and one verifier key, such that the SD-Depositary key is shared only with the SD-Depositary and the Verifier key is shared only with the verifier 3 (as per the main functionality of this multi-part encryption data structure).

To account for the cases where the verifier might need access to the confidential data that is hidden/masked in the token, in a step S204, the verifier 3 may request the holder 2 to have access to the confidential data. In such a case, if the holder 2 accepts, it sends the multi-part encryption data to the verifier 3.

It is to be noted that considering this approach with share encryption key, the timing of sending the multi-part encryption data structure can be changed. For instance, it can only be sent to both the verifier 3 and the SD-Depositary 6 upon request of the verifier 3 in step S204. Alternatively, it could also be sent from the very beginning at steps S203a and S204b. Similarly, the token can be sent to the SD-Depositary at a later stage that at step S203. It is only required at the Depositary at the moment where the SD-Depositary needs it for the decryption.

In a step 205, the verifier 3 requests the SD-Depositary 6 to perform the decryption in the SD-Depositary. The verifier can send its verifier key to the SD-Depositary environment such that the SD-Depositary can perform the decryption of the encrypted payload. By this means, the verifier has access to the information but cannot disseminate a verified information. For instance, he can take a picture, or a screenshot of the interface in the SD-Depositary environment, but he cannot retrieve the verifiable data itself, that stays in the SD-Depositary environment, thus limiting further dissemination.

It is to be noted that a similar approach can be implemented in which instead of a SD Depositary, two verifiers 3 needs to cooperate to obtain the original clear data, in that they both received a multi-part encrypted data structure 5 with segregated access for sharing the necessary keys.

The introduction of the SD-Depositary in conjunction with the multi-part encrypted data structure 4 offers a suite of advantages that enhance both security and data integrity. The SD-Depositary 6 acts as a centralized control point, ensuring that no single entity, including the verifier, can access the original clear data without the proper permissions and adherence to a predefined protocol. This centralization elevates the overall security by preventing direct access to the confidential data, thus significantly reducing the risk of unauthorized data distribution or breaches.

One of the core features of this approach is the dual-key encryption mechanism. By splitting the data encryption key into two parts, one for the SD-Depositary and another for the verifier, the system ensures that both parties must cooperate to decrypt the confidential data. This feature adds an extra layer of security, ensuring that even if one of the keys is compromised, the data remains inaccessible unless both keys are present and used together.

Furthermore, this method provides an environment where the verifier can view the confidential data but is restricted from extracting or disseminating a verifiable version of it. This is achieved by permitting the verifier to access the decrypted information only within the SD-Depositary environment. By allowing viewing but preventing direct data extraction, the method curtails the potential for unauthorized data distribution. Even if the verifier were to capture a screenshot or image of the information, they wouldn't obtain a version that's verifiable outside the SD-Depositary environment.

The flexibility embedded within this approach is also noteworthy. Depending on the specific business needs and levels of trust, the holder has the discretion to decide the timing and sequence of sharing the encrypted data structure and the token. They can opt to share this information preemptively or only upon the verifier's request.

Another significant advantage lies in the potential for collaborative decryption. If two separate verifiers are given different parts of the necessary decryption keys, they would need to cooperate to unveil the original clear data. This collaborative approach can be especially useful in scenarios requiring heightened scrutiny and accountability.

Lastly, with the SD-Depositary acting as a centralized entity, it can maintain logs of all access requests and permissions granted, ensuring a transparent audit trail. This traceability is invaluable in monitoring system activities and tracing any unauthorized access, ensuring accountability and further instilling trust among the system's users.

Finally, it also provides the possibility to store over time the data for verifiers who would need it in the future.

The disclosed approach also has advantages in terms of data processing and data transfer. Indeed, there is only one generation of a certified data package for all the verifiers that need to have access to the information. Further, there is only one transfer of data from the issuer to the holder. And the quantity of data versions corresponding to the "confidentialization" for each verifier is reduced to one in that all the verifiers have access to part of the document corresponding to the access right provided by their access key to the multi-part encrypted data structure (5). There is also a strong reduction of communication with the SD Depositary in that only one data package needs to be sent and stored for all the verifiers.

## Claims

1. A computer implemented method for selectively disclosing information, wherein the method comprises the steps of:
- sending (S101), by a holder (2) to an issuer (1), a request for certifying and partially masking data, where the request comprises original raw data and at least one indication of at least one part of the original raw data to mask;
- sending (S102), by the issuer (1) to the holder (2), a certified data package comprising:
a certified partially masked version of the data (4) comprising at least a part of the original raw data not masked and a part of the original raw data masked according to the at least one indication of a least a part of the original raw data to mask, and
a certified correspondence data comprising a correspondence between the part of original data masked and the original raw data corresponding to the part of data masked;
- sending (S103), by the holder (2) to a verifier (3), the certified partially masked version of the data (4) ;
- sending (S104), by the holder (2) to the verifier (3), a multi-part encrypted data structure (5) corresponding to the certified correspondence.

2. The method of claim 1, wherein the multi-part encrypted data structure (5) comprises:
- a header part (51),
- an information about recipients part (52),
- a list of encrypted transport key part (53), and
- an encrypted payload part (54).

3. The method of claim 1 or 2, wherein, the step of sending (S104), by the holder (2) to the verifier (3), a multi-part encrypted data structure (5) corresponding to the certified correspondence data comprises:
- requesting, by the verifier (3), the holder (2) to send the multi-part encrypted data structure (5) corresponding to the certified correspondence data;
- if the holder accepts the request, sending, by the holder (2) to the verifier (3), the multi-part encrypted data structure (5) corresponding to the certified correspondence data.

4. The method of any one of claims 1 to 3, wherein the request sent by the verifier (3) comprise an indication of the certified partially masked version of the data (4) such that the holder can select a corresponding multi-part encrypted data structure (5).

5. The method of any one of claims 1 to 4, wherein the holder (2) generates the multi-part encrypted data structure (5) from the received certified correspondence data.

6. The method of any one of claims 1 to 4, wherein the certified correspondence data comprised in the certified data package sent by the issuer (1) is in the form of a multi-part encrypted data structure (5).

7. The method of any one of claims 1 to 6, wherein the masked data is a mask obtained using a salt and replacing the original raw data of the at least one part indicated in the at least one indication.

8. The method of any one of claims 1 to 7, wherein the correspondence data is a tuple comprising data used as a mask to replace the original raw data masked and corresponding original raw data which has been replaced by the mask.

9. The method of any one of claims 1 to 8, wherein the method further comprises the steps of:
- registering (S203b), by the holder (2) in a selective disclosure depositary (6), the certified partially masked version of the data (4) and the multi-part encrypted data structure (5) corresponding to the certified correspondence;
- requesting (S205), by the verifier (3), the selective disclosure depositary (6) to perform the decryption of the multi-part encryption data (5).

10. The method of claim 9, wherein the multi-part data structure (5) comprises a key used to encrypt and mask the original raw data and the key is split into at least two parts: one selective disclosure depositary key and one verifier key.

11. The method of claim 9 or 10, wherein the step of registering (S203b), further comprises:
- validating, by the selective disclosure depositary (6), that the certified partially masked version of the data (4) and the multi-part encrypted data structure (5) registered by the holder (2) are validly certified by the issuer (1);
- accepting the registration by the selective disclosure depositary (6) only after validation.

12. The method of any one of claims 9 to 11, wherein the selective disclosure depositary (5) acts as a neutral intermediary between the holder (2) and the verifier (3).

13. A data processing system comprising means for carrying out the steps of the method according to any one of claims 1 to 12, wherein the system comprises a holder device, an issuer device, a verifier device and a selective disclosure depositary (5).

14. A computer program product comprising instructions which, when the program is executed by a computer, cause the computer to carry out the steps of the method according to any one of claims 1 to 12.

15. A computer-readable storage medium comprising instructions which, when executed by a computer, cause the computer to carry out the steps of the method according to any one of claim 1 to 12.
